# EUROPÄISCHE PATENTANMELDUNG

(11) **EP 4 600 708 A1**
(43) Veröffentlichungstag der Anmeldung: **13.08.2025**
(21) Anmeldenummer: 25154017.5
(22) Anmeldetag: 27.01.2025
(51) Int. Cl.: G02B 6/44

(54) **FASEROPTISCHES KABEL**

(30) Priorität: 07.02.2024 DE 102024103374
(71) Anmelder: LWL-Sachsenkabel GmbH-Spezialkabel und Vernetzungstechnik, 09390 Gornsdorf (DE)
(72) Erfinder: Zimmermann, René, 09366 Stollberg/Erzgebirge (DE)
(74) Vertreter: advotec.

(57) **Zusammenfassung**

Die Erfindung betrifft ein faseroptisches Kabel (10) aufweisend eine Fasereinheit (20), die zumindest eine optische Faser (2) umfasst, und zudem aufweisend zumindest ein Mantelelement (1) und/oder zumindest eine Zugentlastungseinheit, wobei das zumindest eine Mantelelement (1) und/oder die zumindest eine Zugentlastungseinheit Basalt aufweist.

## Beschreibung

Die Erfindung betrifft ein faseroptisches Kabel nach dem Oberbegriff des Anspruchs 1.

Faseroptische Kabel enthalten mindestens eine optische Faser, die auch ganz allgemein als Glasfaser bezeichnet werden kann. Diese optische Faser dient der Übertragung von großen Mengen von Daten, insbesondere Computer- und/oder Telekommunikationsinformationen. Um die außerordentlich empfindliche optische Faser in der optischen Übertragungskomponente des faseroptischen Kabels vor äußeren Einflüssen, insbesondere auch während der Installation, zu schützen, umfassen gattungsgemäße faseroptische Kabel eine Schutzummantelung, die die optische Übertragungskomponente ummantelt. Bei dieser Schutzummantelung kann es sich gattungsgemäß beispielsweise um eine Kunststoff- oder Elastomerumhüllung handeln. Weiter ist regelmäßig an faseroptischen Kabeln eine Zugentlastung vorgesehen, die dazu dient, die Kontaktstellen des Kabels, beispielsweise in einem Stecker, zu entlasten. Auch diese Zugentlastungen sind regelmäßig aus Kunststoffen oder Kunstfasern hergestellt. Weiter ist es aus dem Stand der Technik bekannt, sofern Kunststoffe keine ausreichende Zugfestigkeit bieten können, die Zugentlastung aus Kevlar oder Glasrovings herzustellen. Dies erhöht jedoch den Aufwand bei Fertigung und Montage, da neben der Schutzummantelung aus Kunststoff ein weiteres Material bzw. ein weiterer Materialschlauch zur Zugentlastung aus Kevlar oder Glasrovings eingebracht werden muss.

Für eine Vielzahl an Anwendungen ist jedoch eine hohe Temperaturbeständigkeit und geringe Brandlast gefordert, so dass eine Vielzahl an Kunststoffen als Schutzummantelung und/oder Zugentlastung nicht geeignet ist.

Ausgehend von diesem Stand der Technik ist es deshalb Aufgabe der vorliegenden Erfindung, ein neues faseroptisches Kabel vorzuschlagen, dessen Brandlast minimiert ist und das gleichzeitig einfach und kostengünstig herstellbar ist. Zudem soll das faseroptische Kabel zuverlässig einsetzbar und langlebig bei gleichzeitig geringem Raumbedarf sein.

Diese Aufgabe wird durch ein faseroptisches Kabel mit den Merkmalen des Anspruchs 1 gelöst.

Das erfindungsgemäße faseroptische Kabel weist eine Fasereinheit auf, die zumindest eine optische Faser aufweist. Die Fasereinheit kann eine oder mehrere optische Fasern umfassen, wobei eine Mehrzahl optischer Fasern als Faserbündel ausgebildet sein kann. Bevorzugt ist die optische Faser als Glasfaser ausgebildet. Neben der Fasereinheit weist das erfindungsgemäße faseroptische Kabel zudem zumindest ein Mantelelement und/oder zumindest eine Zugentlastungseinheit auf. Das faseroptische Kabel ist dadurch gekennzeichnet, dass das zumindest eine Mantelelement und/oder die zumindest eine Zugentlastungseinheit Basalt aufweist. Mit anderen Worten kann das zumindest eine Mantelelement und/oder die zumindest eine Zugentlastungseinheit aus einem basalthaltigen Material hergestellt sein und/oder mit Basalt, beispielsweise Basaltfasern, verstärkt sein.

Im Rahmen der Erfindung ist das Mantelelement ein Element des faseroptischen Kabels, das eine zumindest die optische Fasereinheit umgebende Hülle des faseroptischen Kabels bildet und die im Inneren des faseroptischen Kabels angeordneten Einheiten und Elemente, wie beispielsweise die Fasereinheit, vor äußeren Einflüssen schützt. Sofern das faseroptische Kabel mehrere optische Fasern aufweist, kann die Gesamtheit der optischen Fasern zusätzlich von einem Mehrfaser-Mantelelement umgeben sein, das die äußere Hülle des faseroptischen Kabels bildet. Mit anderen Worten kann jede einzelne optische Faser von einem Mantelelement umgeben sein, und die optischen Fasern mit ihrem zugeordneten Mantelelement können zusätzlich von einem Mehrfaser-Mantelelement geschützt werden.

Der Begriff "Zugentlastungseinheit" betrifft im Rahmen der Erfindung eine Einheit des faseroptischen Kabels, das eine Zugentlastung des Kabels bewirkt, so dass auftretende Zug-, Druck-, Dreh- und/oder Biegekräfte keine Schäden am Kabel verursachen. Die Zugentlastungseinheit kann innerhalb des Mantelelements angeordnet sein. Die Zugentlastungseinheit kann als Schlauch, Draht und/oder Geflecht ausgebildet sein. Die Zugentlastungseinheit kann sich zumindest abschnittsweise in axialer Richtung entlang der axialen Erstreckung der optischen Fasereinheit erstrecken.

Dadurch, dass das zumindest eine Mantelelement und/oder die zumindest eine Zugentlastungseinheit Basalt aufweist, kann die Widerstandsfähigkeit des faseroptischen Kabels, insbesondere hinsichtlich Temperaturbeständigkeit und Zugfestigkeit, erhöht werden. Zudem kann die Brandlast im Vergleich zu gattungsgemäßen faseroptischen Kabeln, die einen hohen Kunststoffanteil aufweisen, deutlich reduziert werden und die Umweltverträglichkeit erhöht werden, da eine wesentlich geringere Anzahl und Menge an Kunststoffen mit entsprechenden Brandschutzzuschlägen benötigt wird. Weiter wurde es im Rahmen der Erfindung erkannt, dass Basalt keinem Schrumpf unterliegt, wie er bei gattungsgemäßen faseroptischen Kabeln, die aus Kunststoffmaterialien hergestellt sind, insbesondere bei Temperaturveränderungen, auftritt. Dies erhöht die Verlässlichkeit und Lebensdauer der erfindungsgemäßen faseroptischen Kabel wesentlich gegenüber gattungsgemäßen faseroptischen Kabeln, da der Schrumpf der Kunststoffmaterialien zu einem Ausfall der optischen Kabel führen kann.

Bevorzugt umfasst das faseroptische Kabel zumindest ein Mantelelement und zumindest eine Zugentlastungseinheit, wobei sowohl das zumindest eine Mantelelement als auch die zumindest eine Zugentlastungseinheit Basalt aufweisen. Das zumindest eine Mantelelement und/oder die zumindest eine Zugentlastungseinheit kann vollständig aus Basalt ausgebildet sein, so dass der Kunststoffanteil im faseroptischen Kabel minimiert oder eliminiert werden kann. Dabei wurde es im Rahmen der Erfindung erkannt, dass durch Minimierung des Kunststoffanteils im faseroptischen Kabel die Einsatztemperatur des faseroptischen Kabels gesteigert werden kann. Werden die Kunststoffanteile im faseroptischen Kabel eliminiert, ist vorteilhafterweise die Einsatztemperatur des faseroptischen Kabels nur noch von der verwendeten Glasfaser und deren Aufbau abhängig.

In vorteilhafter Weise kann das erfindungsgemäße faseroptische Kabel trotz einer höheren Widerstandsfähigkeit im Vergleich zu gattungsgemä-ßen faseroptischen Kabeln weiterhin einen relativ einfachen Aufbau aufweisen. Dabei kann das faseroptische Kabel als sogenanntes "Patchkabel" ausgebildet sein. Im Rahmen der Erfindung betrifft ein "Patchkabel" ein faseroptisches Kabel mit zumindest einer, bevorzugt einer einzelnen, optischen Faser, die von einem Mantelelement umgeben ist. Zudem weist ein Patchkabel erfindungsgemäß eine Zugentlastungseinheit auf. Weiter kann an den Enden des faseroptischen Kabels, beispielsweise eines Patchkabels, ein Steckverbinderelement angeordnet sein.

Im Rahmen der Erfindung kann das faseroptische Kabel auch als sogenanntes "Mehrfaserkabel" oder "Aufteilkabel" ausgebildet sein. Ein "Mehrfaserkabel" betrifft im Rahmen der Erfindung ein faseroptisches Kabel das eine Vielzahl optischer Fasern aufweisen kann, die von einem gemeinsamen Mantelelement, das im Rahmen der Erfindung auch als Mehrfaser-Mantelelement bezeichnet ist, umgeben sind, wobei je nach Ausführung jede einzelne optische Faser zusätzlich direkt von einem weiteren eigenen Mantelelement umgeben sein kann. Es ist bekannt, dass zur Konfektionierung eines mehrfaserigen faseroptischen Kabels bzw. zur Anbringung von Steckverbinderelementen an einem mehrfaserigen faseroptischen Kabel die einzelnen Fasern vereinzelt werden können. Ein "Aufteilkabel" betrifft im Rahmen der Erfindung ein als Mehrfaserkabel ausgebildetes faseroptisches Kabel mit einem Mehrfaser-Mantelelement und mit zumindest einer Zugentlastungseinheit, wobei bevorzugt pro optischer Faser eine Zugentlastungseinheit umfasst sein kann, und mit einem Aufteileinheit, welches der Vereinzelung der einzelnen optischen Fasern dient. Weiter kann jede einzelne optische Faser eines Aufteilkabels von einem eigenen Mantelelement umgeben sein. Das heißt mit anderen Worten, dass jede einzelne Faser von einem Mantelelement umschlossen sein kann und zudem die Gesamtzahl der optischen Fasern innerhalb eines gemeinsamen Mehrfaser-Mantelelements angeordnet sein kann. Sofern das erfindungsgemäße faseroptische Kabel als Mehrfaserkabel oder Aufteilkabel ausgebildet ist, können die Mantelelemente, das Mehrfaser-Mantelelement und die Zugentlastungseinheit Basalt aufweisen oder vollständig aus Basalt ausgebildet sein, um die Widerstandsfähigkeit des faseroptischen Mehrfaserkabels oder Aufteilkabels zu erhöhen.

Vorteilhafte Ausführungsformen der Erfindung sind Gegenstand der abhängigen Ansprüche. In den Rahmen der Erfindung fallen zudem sämtliche Kombinationen aus mindestens zwei in der Beschreibung, den Ansprüchen und/oder den Figuren offenbarten Merkmalen. Es versteht sich, dass sprachübliche Umformungen und/oder ein sinngemäßes Ersetzen von jeweiligen Begrifflichkeiten im Rahmen der üblichen sprachlichen Praxis, insbesondere das Verwenden von durch die allgemein anerkannte Sprachliteratur gestützten Synonymen, von dem vorliegenden Offenbarungsgehalt umfasst sind, ohne in ihrer jeweiligen Ausformulierung explizit erwähnt zu werden.

Das zumindest eine Mantelelement und/oder die zumindest eine Zugentlastungseinheit kann eine Basaltfaser und/oder ein Basaltgeflecht umfassen. Im Rahmen der Erfindung betrifft der Begriff "Basaltgeflecht" sowohl ein Geflecht als auch Gewebe, Gestricke, Gewirke, Gelege und Vlies aus Basalt. Die Basaltfaserverstärkung mittels Basaltfasern oder eines Basaltgeflechts lässt sich in einfacher Art und Weise verarbeiten und bietet eine anforderungsgemäße Verstärkungs- und Schutzfunktion. Zur Verstärkung können beispielsweise mehrere Basaltfasern in ein Mantelelement und/oder eine Zugentlastungseinheit eingebracht sein, wobei sich die Basaltfasern bevorzugt parallel zur Längserstreckung der optischen Faser erstrecken. Das Basaltgeflecht kann als Basaltschlauch ausgebildet sein. Ein Basaltschlauch ist im Rahmen der Erfindung ein schlauchförmiges Basaltgeflecht. Bevorzugt kann das Mantelelement einen Basaltschlauch aufweisen. Es ist denkbar, dass das Mantelelement und/oder die Zugentlastungseinheit als Basaltgeflecht, insbesondere Basaltschlauch, ausgebildet ist, so dass der Kunststoffeinsatz minimiert wird.

Die Zugentlastungseinheit kann eine Zugfestigkeit von zumindest 70 N/mm² aufweisen. Die Zugfestigkeit der Zugentlastungseinheit kann, insbesondere bei Mehrfaserkabeln, auch eine Zugfestigkeit von zumindest 250 N/mm² aufweisen. Im Rahmen der Erfindung wurde es erkannt, dass die anforderungsgemäße Zugfestigkeit durch den Einsatz von Basalt in der Zugentlastungseinheit erreicht werden kann. Durch Erreichen der anforderungsgemäßen Zugfestigkeit können das Kabel sowie die Kontaktstellen und die Steckverbinderelemente des Kabels entlastet werden, und somit kann die Lebensdauer wesentlich erhöht werden. Bevorzugt können die Basaltfasern oder das Basaltgeflecht der Zugentlastungseinheit eine Zugfestigkeit von zumindest 3 kN/mm² oder von zumindest 3,5 kN/mm² oder von zumindest 4 kN/mm² aufweisen.

Das zumindest eine Mantelelement kann eine Temperaturbeständigkeit von zumindest bis zu 500° Celsius (C) aufweisen. Das zumindest eine Mantelelement kann derart mit Basalt verstärkt sein, dass die anforderungsgemäße Temperaturbeständigkeit von zumindest bis zu 500°C erreicht wird. Das heißt, dass sich erst bei Erreichen oder Überschreiten einer Temperatur von 500° C die temperaturabhängigen Eigenschaften des Mantelelements verändern. Insbesondere für die Anwendung des faseroptischen Kabels im Hochtemperaturbereich kann das Mantelelement ausschließlich ein schlauchförmiges Basaltgeflecht aufweisen. Es ist denkbar, dass das Mantelelement ein Basaltgeflecht und ein Zusatzmaterial umfasst, wobei das Zusatzmaterial zumindest die gleiche oder eine höhere Temperaturbeständigkeit als das Basaltgeflecht aufweist. Mit anderen Worten ist das Mantelelement derart ausgebildet, dass das Basaltgeflecht der limitierende Faktor bezüglich der Temperaturbeständigkeit ist. Bevorzugt weist das zumindest eine Mantelelement eine Temperaturbeständigkeit von zumindest bis zu 600° C auf. Die erhöhte Temperaturbeständigkeit von zumindest bis zu 500° C des Mantelelements ist vorteilhafterweise wesentlich höher als die Temperaturbeständigkeit eines Kunststoffmantels eines gattungsgemäßen faseroptischen Kabels. Auch die Zugentlastungseinheit und/oder ein Mehrfaser-Mantelelement kann gemäß einer Ausführungsform in gleicher Weise wie vorangehend bezüglich des Mantelelements aufgrund der ausschließlichen Ausbildung als Basaltgeflecht und/oder der Ausbildung als Basaltgeflecht mit einem Zusatzstoff eine Temperaturbeständigkeit von zumindest bis zu 500° C, bevorzugt zumindest bis zu 600° C, aufweisen.

Das faseroptische Kabel kann ein Knickschutzelement umfassen. Das Knickschutzelement schützt das faseroptische Kabel vor zu starker Beanspruchung, insbesondere vor einem Abknicken oder Abreißen. Das Knickschutzelement ist bevorzugt an zumindest einem Ende, weiter bevorzugt an beiden Enden, des faseroptischen Kabels angeordnet. Um einen ausreichenden Schutz zu bieten, kann das Knickschutzelement starrer als das Mantelelement ausgebildet sein.

Die Zugentlastungseinheit kann zumindest teilweise unter dem Knickschutzelement angeordnet sein. Im Rahmen der Erfindung bedeutet der Terminus "unter dem Knickschutzelement", dass das Knickschutzelement in radialer Richtung weiter entfernt von der optischen Faser angeordnet ist. Mit anderen Worten kann das Knickschutzelement die Zugentlastungseinheit zumindest teilweise ummanteln. Bevorzugt ist das Knickschutzelement an einem endseitigen Abschnitt des faseroptischen Kabels angeordnet.

An zumindest einem Ende der Fasereinheit, insbesondere an einem Ende der optischen Faser, kann ein Steckverbinderelement angeordnet sein. Mittels des Steckverbinderelements ist das faseroptische Kabel schnell und sicher, beispielsweise mit einer entsprechenden Buchse, lösbar verbindbar. Bevorzugt ist an jedem Ende der Fasereinheit ein Steckverbinderelement angeordnet.

Das Steckverbinderelement kann als Simplex-Steckverbinderelement, Duplex-Steckverbinderelement oder als Multi-Steckverbinderelement ausgebildet sein. Ein Simplex-Steckverbinderelement ist zur Aufnahme einer optischen Faser ausgebildet. Ein Duplex-Steckverbinderelement ist zur Aufnahme von zwei Fasern ausgebildet. Ein Multi-Steckverbinderelement ist zur Aufnahme mehrerer Fasern, insbesondere von mehr als zwei Fasern, ausgebildet.

Die optische Faser kann einen Faserdurchmesser zwischen 0,1 mm und 2,5 mm aufweisen. Der Faserdurchmesser ist abhängig von der Anwendung. Insbesondere bei der Anwendung in der Datenübertragung kann eine anforderungsgemäße Datenübertragung bei gleichzeitig geringem Raumbedarf mit einer optischen Faser mit einem Faserdurchmesser zwischen 0,1 mm und 2,5 mm gewährleistet werden. Optische Fasern mit einem Faserdurchmesser zwischen 0,1 mm und 2,5 mm können zudem besonders einfach zu faseroptischen Kabeln konfektioniert werden, wobei hohe Packungsdichten, ein kleiner und einfacher Kabelaufbau sowie eine effiziente Raumausnutzung gewährleistet werden können. Insbesondere optische Fasern mit einem Faserdurchmesser zwischen 0,2 mm und 0,9 mm sind für den Einsatz in einem erfindungsgemäßen faseroptischen Kabel vorgesehen, wobei das faseroptische Kabel bevorzugt als Simplex-Kabel, Duplex-Kabel, Mehrfaserkabel oder Aufteilkabel ausgestaltet sein kann. Ein Simplex-Kabel weist lediglich eine optische Faser auf, ein Duplex-Kabel weist zwei optische Fasern auf und ein Aufteilkabel oder Mehrfaserkabel kann eine Vielzahl an optischen Fasern, bevorzugt zwischen vier und 144 optische Fasern, aufweisen.

Das faseroptische Kabel kann eine Aufteileinheit zur Vereinzelung einer Mehrzahl an Fasern der Fasereinheit umfassen. Eine Aufteileinheit ist insbesondere dann vorteilhaft, wenn das faseroptische Kabel als Aufteilkabel ausgebildet ist. Das Aufteileinheit kann eine durchgehende Zugentlastung gewährleisten und die optischen Fasern, die innerhalb des Kabels geführt sind, insbesondere im Bereich der Aufteilung in einzelne Fasern schützen. Es ist denkbar, dass auch das Aufteileinheit Basalt aufweist und/oder mit Basalt, bevorzugt Basaltgeflecht und/oder Basaltfasern, verstärkt ist.

Das faseroptische Kabel kann als Mehrfaserkabel ausgebildet sein und ein Mehrfaser-Mantelelement aufweisen, das eine Vielzahl optischer Fasern umschließt. Jede einzelne optische Faser kann zudem zumindest von je einem Mantelelement umschlossen sein, wobei das Mehrfaser-Mantelelement die optischen Fasern sowie deren Mantelelemente umschließt. Das Mehrfaser-Mantelelement kann bevorzugt zwei bis 144 optische Fasern umschließen. Gemäß einer Ausführungsform können die optischen Fasern im Bündel innerhalb des Mehrfaser-Mantelelements bis zu einer Aufteileinheit geführt werden, wobei das Mehrfaser-Mantelelement innerhalb der Aufteileinheit endet und sich die vereinzelten optischen Fasern umschlossen von einem Mantelelement aus der Aufteileinheit hinaus erstrecken. Das Mehrfaser-Mantelelement kann die gleichen Merkmale aufweisen wie ein Mantelelement. Insbesondere kann das Mehrfaser-Mantelelement eine Basaltfaser und/oder ein Basaltgeflecht umfassen. Somit kann auch der Kunststoffanteil im Mehrfaser-Mantelelement aufgrund einer Basaltverstärkung minimiert werden und somit die Widerstandsfähigkeit bei gleichzeitiger Reduzierung der Brandlast erhöht werden.

Das Knickschutzelement und/oder die zumindest eine Zugentlastungseinheit können in einfacher Art und Weise mit dem zumindest einen Mantelelement und/oder dem Mehrfaser-Mantelelement mittels Crimpen, Kleben und/oder Umspritzen verbunden sein. Beim Crimpen werden die zwei Fügepartner, im Rahmen der Erfindung beispielsweise das Knickschutzelement mit dem Mantelelement und/oder die Zugentlastungseinheit mit dem Mantelelement, durch plastische Verformung, insbesondere hervorgerufen durch ein Verpressen der Fügepartner, miteinander verbunden. Alternativ und/oder zusätzlich kann das Knickschutzelement mit dem zumindest einen Mantelelement und/oder die zumindest eine Zugentlastungseinheit mit dem zumindest einen Mantelelement verklebt werden. Es ist auch denkbar, dass, wenn das Knickschutzelement aus einem spritzbaren Material, beispielsweise einem Kunststoff, gefertigt ist, das Mantelelement, das Mehrfaser-Mantelelement und/oder die zumindest eine Zugentlastungseinheit während der Ausbildung des Knickschutzelements umspritzt werden. Beim Umspritzen kann in einfacher Art und Weise das faseroptische Kabel mit zumindest einem Mantelelement und ggf. einer Zugentlastungseinheit in die Spritzgussform eingelegt werden und zur Ausbildung des Knickschutzelements umspritzt werden, um das Mantelelement und/oder die Zugentlastungseinheit mit dem Knickschutzelement zu verbinden.

Gemäß einer vorteilhaften Ausführungsform können das zumindest eine Mantelelement und die Zugentlastungseinheit zu einer Mantelschlaucheinheit zusammengefasst sein. Die Mantelschlaucheinheit kann bevorzugt als ein einziger Basaltschlauch ausgeführt sein, wobei es im Rahmen der Erfindung erkannt wurde, dass ein Basaltschlauch sowohl die Funktion eines Mantelelements als auch einer Zugentlastungseinheit erfüllen kann. Bei Kombination des Mantelelements und der Zugentlastungseinheit zu einer Mantelschlaucheinheit kann der Raumbedarf des erfindungsgemä-ßen faseroptischen Kabels weiter reduziert und der Kabelaufbau weiter vereinfacht werden. Dadurch kann sich unter anderem die Luftzirkulation im Bereich der Kabel durch die erhebliche Raumeinsparung erhöhen lassen. Auch verringert sich der Biegeradius der erfindungsgemäßen faseroptischen Kabel bei Zusammenfassung des Mantelelements und der Zugentlastungseinheit zu einer Mantelschlaucheinheit. Weiter ist es denkbar, dass auch das Mehrfaser-Mantelelement als Basaltschlauch ausgebildet ist und somit keine zusätzliche Zugentlastungseinheit an einem als Aufteilkabel oder Mehrfaserkabel ausgebildeten faseroptischen Kabel, insbesondere zwischen zwei Aufteileinheiten, notwendig wird.

Es versteht sich, dass die zuvor genannten und nachstehend noch zu erläuternden Ausführungsformen und Ausführungsbeispiele nicht nur einzeln, sondern auch in beliebiger Kombination miteinander ausbildbar sind, ohne den Umfang der vorliegenden Erfindung zu verlassen.

Ausführungsformen der Erfindung sind in den Zeichnungen schematisiert dargestellt und werden nachfolgend beispielhaft erläutert.

Es zeigen:
- **Fig. 1**: ein schematisches erstes Ausführungsbeispiel eines erfindungsgemäßen faseroptischen Kabels im Längsschnitt;
- **Fig. 2**: ein zweites Ausführungsbeispiel eines erfindungsgemäßen faseroptischen Kabels im Längsschnitt;
- **Fig. 3**: ein erfindungsgemäßes faseroptisches Kabel mit einer Mantelschlaucheinheit im Querschnitt.

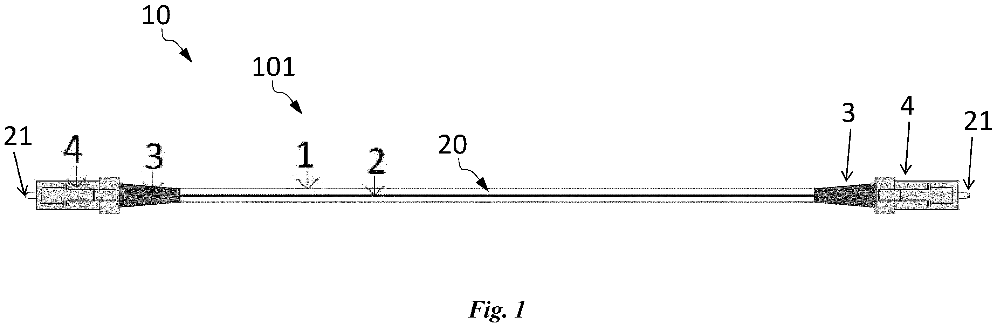

**Figur 1** zeigt ein erfindungsgemäßes faseroptisches Kabel 10, das als Simplex-Kabel 101 ausgebildet ist. Das Simplex-Kabel 101 weist eine einzelne optische Faser 2 auf, die von einem als Basaltschlauch ausgebildeten Mantelelement 1 umschlossen ist. Jedes Ende der optischen Faser 2 ist in ein Steckverbinderelement 4 eingeführt. Das Steckverbinderelement 4 dient der sicheren Verbindung des erfindungsgemäßen faseroptischen Kabels 10 mit einem weiteren hier nicht dargestellten faseroptischen Kabel oder einer komplementär zum Steckverbinderelement 4 ausgebildeten hier nicht dargestellten Buchse. An dem vom Faserende 21 der optischen Faser 2 abgewandten Ende des Steckverbinderelements 4 ist ein Knickschutzelement 3 angeordnet. Die hier nicht gezeigte Zugentlastungseinheit kann unter einem Knickschutzelement 3 angeordnet sein und/oder in das Mantelelement 1 derart integriert sein, dass das Mantelelement 1 und die nicht separat dargestellte Zugentlastungseinheit zu einer Mantelschlaucheinheit zusammengefasst sind und das Mantelelement 1 zugleich die Zugentlastungseinheit ausbildet. Da das faseroptische Kabel 10 gemäß Figur 1 als Simplex-Kabel 101 ausgebildet ist, umfasst die Fasereinheit 20 nur eine einzelne optische Faser 2.

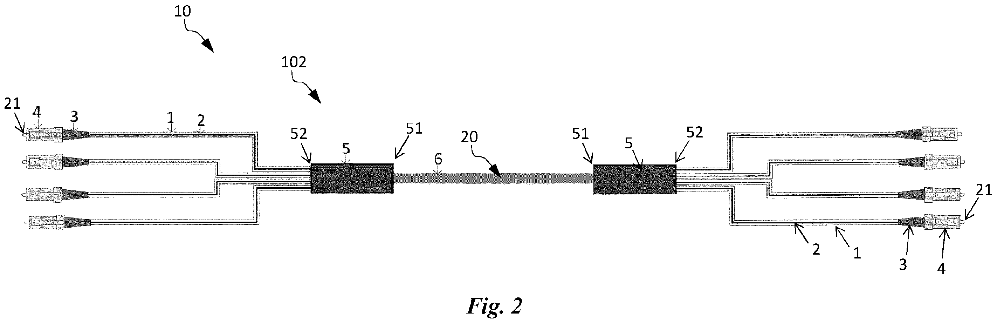

Demgegenüber weist die Fasereinheit 20 des in **Figur 2** gezeigten faseroptischen Kabels 10, das als Aufteilkabel 102 ausgebildet ist, eine Vielzahl an optischen Fasern 2 auf. Die Vielzahl der optischen Fasern 2 der Fasereinheit 20 sind zwischen den zwei Aufteileinheiten 5 gemeinsam in einem Mehrfaser-Mantelelement 6 angeordnet. Das Mehrfaser-Mantelelement 6 kann Basalt aufweisen und ist bevorzugt als Basaltschlauch ausgebildet. Jede einzelne optische Faser 2 ist zudem von einem Mantelelement 1 umgeben, wobei die optischen Fasern 2 mit ihren zugeordneten Mantelelementen 1 zwischen den Aufteileinheiten 5 gemeinsam im Mehrfaser-Mantelelement 6 geschützt geführt sind und mittels der Aufteileinheit 5 vereinzelt werden können. Das heißt mit anderen Worten, dass an einem Eingang 51 der Aufteileinheit 5 die optischen Fasern 2 innerhalb des Mehrfaser-Mantelelements 6 angeordnet eingeführt werden und an einem Ausgang 52 der Aufteileinheit 5 die vereinzelten optischen Fasern 2 jeweils von einem Mantelelement 1 umgeben aus der Aufteileinheit 5 austreten. Am Faserende 21 jeder optischen Faser 2 sind, wie bereits in Figur 1 beschrieben, ein Steckverbinderelement 4 und ein Knickschutzelement 3 angeordnet. Die Zugentlastungseinheit ist nicht separat dargestellt, da Mantelelement 1 und Zugentlastungseinheit gemäß vorliegender Ausführungsform des faseroptischen Kabels 10 zu einer Mantelschlaucheinheit zusammengefasst sind. Das heißt, dass ein einziger Basaltschlauch, der sowohl Mantelelement 1 als auch Zugentlastungseinheit bildet, ausreicht, um sowohl die Schutzfunktion des Mantelelements 1 als auch die Entlastungsfunktion der Zugentlastungseinheit zu übernehmen.

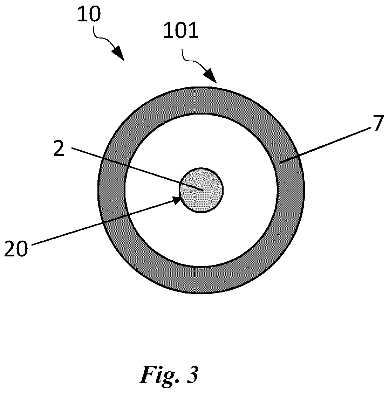

**Figur 3** zeigt ein erfindungsgemäßes faseroptisches Kabel 10 mit einer Mantelschlaucheinheit 7 im Querschnitt. Das gezeigte faseroptische Kabel 10 ist als Simplex-Kabel 101 ausgebildet. Die Fasereinheit 20 dieses Simplex-Kabels 101 weist eine einzelne optische Faser 2 auf, die von der Mantelschlaucheinheit 7 umschlossen ist. Die Mantelschlaucheinheit bildet zugleich das Mantelelement und die Zugentlastungseinheit aus. Mit anderen Worten kombiniert die gezeigte Mantelschlaucheinheit 7, die als Basaltschlauch ausgebildet ist, das Mantelelement und die Zugentlastungseinheit in einem Funktionselement. Dadurch kann sowohl eine sichere Anbindung, beispielsweise über hier nicht gezeigte Steckverbinderelemente 4, an weitere faseroptische Kabel erfolgen und zugleich die optische Faser 2 vor Umgebungseinflüssen geschützt werden. Im Ergebnis weist das faseroptische Kabel 10 gemäß Figur 3 nur einen einzigen Basaltschlauch auf, der die Schutzfunktion eines Mantelelements und zudem die Entlastungsfunktion einer Zugentlastungseinheit übernimmt, wodurch der Raumbedarf des gezeigten faseroptischen Kabels 10 gegenüber gattungsmäßen faseroptischen Kabeln deutlich verringert werden kann.

## Patentansprüche

1. Faseroptisches Kabel (10) aufweisend eine Fasereinheit (20), die zumindest eine optische Faser (2) umfasst, und zudem aufweisend zumindest ein Mantelelement (1) und/oder zumindest eine Zugentlastungseinheit,
**dadurch gekennzeichnet,**
**dass** das zumindest eine Mantelelement (1) und/oder die zumindest eine Zugentlastungseinheit Basalt aufweist.

2. Faseroptisches Kabel nach Anspruch 1,
**dadurch gekennzeichnet,**
**dass** das zumindest eine Mantelelement (1) und/oder die zumindest eine Zugentlastungseinheit eine Basaltfaser und/oder ein Basaltgeflecht umfasst.

3. Faseroptisches Kabel nach Anspruch 1 oder 2,
**dadurch gekennzeichnet,**
**dass** die zumindest eine Zugentlastungseinheit eine Zugfestigkeit von zumindest 70 N/mm² aufweist.

4. Faseroptisches Kabel nach einem der Ansprüche 1 bis 3,
**dadurch gekennzeichnet,**
**dass** das zumindest eine Mantelelement (1) eine Temperaturbeständigkeit von zumindest bis zu 500 Grad Celsius aufweist.

5. Faseroptisches Kabel nach einem der Ansprüche 1 bis 4,
**dadurch gekennzeichnet,**
**dass** ein Knickschutzelement (3) umfasst ist.

6. Faseroptisches Kabel nach Anspruch 5,
**dadurch gekennzeichnet,**
**dass** die Zugentlastungseinheit zumindest teilweise unter dem Knickschutzelement (3) angeordnet ist.

7. Faseroptisches Kabel nach einem der Ansprüche 1 bis 6,
**dadurch gekennzeichnet,**
**dass** ein Steckverbinderelement (4) an zumindest einem Ende der Fasereinheit (20) angeordnet ist.

8. Faseroptisches Kabel nach Anspruch 6,
**dadurch gekennzeichnet,**
**dass** das Steckverbinderelement (4) als Simplex-Steckverbinderelement, Duplex-Steckverbinderelement oder als Multi-Steckverbinderelement ausgebildet ist.

9. Faseroptisches Kabel nach einem der Ansprüche 1 bis 8,
**dadurch gekennzeichnet,**
**dass** die optische Faser (2) einen Faserdurchmesser zwischen 0,1 mm und 2,5 mm aufweist.

10. Faseroptisches Kabel nach einem der Ansprüche 1 bis 9,
**dadurch gekennzeichnet,**
**dass** eine Aufteileinheit (5) zur Vereinzelung einer Mehrzahl an Fasern (2) der Fasereinheit (20) umfasst ist.

11. Faseroptisches Kabel nach einem der Ansprüche 1 bis 10,
**dadurch gekennzeichnet,**
**dass** ein Mehrfaser-Mantelelement (6) eine Vielzahl optischer Fasern (2) umschließt.

12. Faseroptisches Kabel nach einem der Ansprüche 1 bis 11,
**dadurch gekennzeichnet,**
**dass** das Knickschutzelement (3) und/oder die zumindest eine Zugentlastungseinheit mit dem zumindest einen Mantelelement (1) und/oder mit dem Mehrfaser-Mantelelement (6) mittels Crimpen, Kleben und/oder Umspritzen verbunden ist.

13. Faseroptisches Kabel nach einem der Ansprüche 1 bis 12,
**dadurch gekennzeichnet,**
**dass** das zumindest eine Mantelelement (1) und die Zugentlastungseinheit zu einer Mantelschlaucheinheit zusammengefasst sind.
